# EUROPÄISCHE PATENTSCHRIFT

(11) **EP 2 217 755 B1**
(45) Veröffentlichungstag und Bekanntmachung des Hinweises auf die Patenterteilung: **12.06.2013**
(21) Anmeldenummer: 08854389.7
(22) Anmeldetag: 28.10.2008
(51) Int. Cl.: D06F 39/10, A47L 15/42

(54) **WASSERFÜHRENDES HAUSHALTSGERÄT**
WATER-BEARING DOMESTIC APPLIANCE
APPAREIL MÉNAGER À CIRCULATION D'EAU

(30) Priorität: 27.11.2007 DE 102007056919
(43) Veröffentlichungstag der Anmeldung: 18.08.2010
(73) Patentinhaber: BSH Bosch und Siemens Hausgeräte GmbH, 81739 München (DE)
(72) Erfinder: BÜSING, Johannes, 86494 Emersacker (DE); FETZER, Gerhard, 89423 Gundelfingen (DE); GROLL, Hubert, 89426 Mödingen (DE); RIEGER, Roland, 73492 Rainau (DE)
(86) Internationale Anmeldenummer: PCT/EP2008/064576
(87) Internationale Veröffentlichungsnummer: WO 2009/068390

(56) Entgegenhaltungen:
- US-A- 3 217 884
- US-A- 3 429 444
- US-A1- 2004 129 034
- US-B1- 6 402 962

## Beschreibung

Die vorliegende Erfindung betrifft ein wasserführendes Haushaltsgerät nach dem Oberbegriff des Anspruchs 1.

Wasserführende Haushaltsgeräte, wie z.B. Geschirrspül- oder Waschmaschinen weisen ein Siebsystem auf, das mehrere Stufen umfassen kann und dazu dient, während des Betriebes umgewälzte Spülflotte von Schmutzpartikeln zu befreien, die sonst eine Rückanschmutzung bewirken könnten. Bei zu hohen Schmutzfrachten kann jedoch das Siebsystem verstopfen und seine Wirkung verlieren, da dann verschmutzte Spülflotte über einen Bypass ungefiltert umgewälzt wird.

Aus der DE 41 31 914 C2 ist ein wasserführendes Haushaltsgerät bekannt, dass ein selbstreinigendes Filtersystem aufweist. Das selbstreinigende Filtersystem weist unter anderem einen axial rotierbaren Siebeinsatz auf, dessen Mantel sich nach unten hin konisch erweitert. Schmutzteile, die an seiner Innenseite anhaften, werden aufgrund der Fliehkraft nach unten in eine Schmutzfangkammer gedrückt, bis sie bei einem Entleerungsvorgang entfernt werden.

Die US 3,217,884 offenbart eine Geschirrspülmaschine, bei der eine in einem Hydraulikkreislauf angeordnete ortsfeste Siebfläche mittels Rückspülen reinigbar ist. Dabei wird die Spülflotte zeitweise entgegen der zum Spülen vorgesehenen Durchströmungsrichtung durch die Siebfläche geleitet, um Schmutz von der Siebfläche abzulösen und aus der Geschirrspülmaschine abzupumpen.

Aus der US 3,533,841 ist eine weitere Geschirrspülmaschine bekannt, bei der eine Siebfläche schubladenartig aus dem Spülbehälter herausgezogen werden kann, um diese dann manuell reinigen zu können.

Weiterhin ist aus der US 3,429,444 eine Waschmaschine bekannt, die eine Filtereinrichtung zum Zurückhalten von Flusen aufweist. Ein Filterelement weist hierbei abstehende Zähne auf, an denen sich die Flusen verfangen sollen. Eine derartige Filtereinrichtung ist für eine Geschirrspülmaschine ungeeignet, da sie die typischer weise im Spülwasser einer Geschirrspülmaschine vorhandenen Schmutzpartikel nicht zurückhalten kann.

Aufgabe der vorliegenden Erfindung ist es, ein wasserführendes Haushaltsgerät mit einer Filter- bzw. Siebvorrichtung anzugeben, das bei einfachem Aufbau auch bei hohen Schmutzfrachten zuverlässig arbeitet und so Rückanschmutzungen verhindert.

Die Erfindung geht aus von einem wasserführenden Haushaltsgerät, insbesondere Geschirrspül- oder Waschmaschine, wenigstens aufweisend einen Hydraulikkreislauf und eine Siebvorrichtung, die eine in dem Hydraulikkreislauf angeordnete ortsfeste Siebfläche zum Filtern umgewälzten Spülwassers aufweist. Dabei ist die Siebfläche mittels Rückspülen reinigbar.

Die Aufgabe der Erfindung wird dadurch gelöst, dass die Siebfläche quer zur Durchströmungsrichtung der Siebfläche gerichtete Querströme erzeugend ausgebildet ist, sodass durch die Querströmung bewirkt wird, dass zurückgehaltene Partikel sich in ausgewählten Bereichen sammeln, während andere Bereiche frei von Partikelansammlungen bleiben und daher das Sieb-/Filtersystem funktionsfähig bleibt. Mit einer Rückspüleinrichtung kann eine Reinigung des Siebsystems erfolgen, bei dem die Spülflotte im Gegenstrom zur Fließrichtung das Siebsystem durchströmt.

Um dabei das Ablösen anhaftender Schmutzteile zu erleichtern und eine derartige Querströmung zu bewirken ist die Siebfläche mit Erhebungen oder Vertiefungen ausgebildet. Die Siebfläche erhält dadurch Abschnitte, deren Höhenniveau unter dem der übrigen Siebfläche liegt. In diesen Vertiefungen sammeln sich die Schmutzteile bevorzugt an. Das hat zur Folge, dass einerseits die höher liegenden Bereiche der Siebfläche frei bleiben und dadurch wird ein ungehinderter Durchtritt des zu filternden Wassers ermöglicht. Ein Mindestdurchtrittsquerschnitt der Siebvorrichtung bleibt somit erhalten. Andererseits sammeln sich die Schmutzteile bevorzugt in den Vertiefungen an und verfestigen sich dort. In dieser konzentrierten Form lassen sie sich beim Rückspülen leichter entfernen. Damit kann eine solche Siebvorrichtung im Idealfall lebenslang wartungsfrei bleiben.

Die erfindungsgemäße Form der Siebfläche kann bei einer ebenen Ausgestaltung durch Ausbildung von beispielsweise topfförmigen Eintiefungen erzielt werden. Die Bodenflächen der Eintiefungen bilden dann ein gegenüber der übrigen Siebfläche abgesenktes Höhenniveau. Alternativ kann die Siebfläche sowohl derartige Eintiefungen als auch vergleichbare Ausstülpungen oder Erhebungen in der Gegenrichtung aufweisen. Liegen sie eng beieinander, kann die ursprüngliche waagrechte Siebebene vollständig aufgelöst sein, sodass waagrechte Abschnitte nur noch an den Bodenflächen der Eintiefungen und an den Deckflächen der Ausstülpungen vorliegen. Ein wesentlicher Effekt dieser Ausgestaltungen der Siebfläche ist zudern, dass sich ihre wirksame Fläche auf gleichem Raum deutlich vergrößert. Gegenüber herkömmlich gestalteten Siebvorrichtungen steht im Wesentlichen also bei gleichem Platzbedarf eine größere wirksame Durchtrittsfläche für umgewälztes Spülwasser in der Siebvorrichtung zur Verfügung.

Eine Durchflussrichtung an der Siebvorrichtung ist die während eines Spülvorgangs vorherrschende Fließrichtung des Spülwassers unmittelbar durch die Siebfläche hindurch. Eine Anströmrichtung der Siebvorrichtung ist die Strömungsrichtung des Spülwassers bei Eintritt in die Siebvorrichtung. Bei einer ebenen Siebfläche kann sie im Wesentlichen parallel zur Durchflussrichtung und rechtwinklig zur Siebfläche verlaufen. Bei der Reinigung der Siebvorrichtung durch Rückspülung wird Wasser entgegen der Durchflussrichtung durch das Sieb bzw. entgegen der Anströmrichtung durch die Siebvorrichtung gesaugt bzw. die Strömungsrichtung wird umgekehrt.

Die Siebfläche kann sich grundsätzlich flächig in einer Ebene erstrecken. Nach einer bevorzugten Ausführungsform der Erfindung kann die Siebfläche jedoch zylinderförmig oder konisch geformt angeordnet sein. Bildet sie zum Beispiel die Mantelfläche eines Zylinders, kann die Siebvorrichtung auch bei beengten Einbauverhältnissen in Geschirrspülern zum Einsatz kommen, ohne dass sich dabei die wirksame Siebfläche verkleinert. Ein weiterer Vorteil dieser Formen ist eine erhöhte Eigenstabilität der Siebvorrichtung. Auf Versteifungselemente kann dann weitgehend verzichtet werden. Bei diesen Ausführungsformen stehen die Anströmrichtung der Siebvorrichtung und die Durchströmrichtung der Siebfläche im Wesentlichen senkrecht aufeinander. Denn die Siebvorrichtung wird dann in der Regel von einer ihrer kreisförmigen Deckflächen aus, also axial angeströmt, das Wasser wird umgeleitet und durchströmt dann die Siebfläche radial. Da sie durch Rückspülung gereinigt werden kann, kann die Siebvorrichtung drehfest angeordnet sein.

Die Form der Eintiefungen und/oder Ausstülpungen und deren Anordnung auf der Siebfläche kann grundsätzlich und in Hinblick auf ihre Funktion nahezu beliebig ausgestalten sein. Nach einer weiteren vorteilhaften Ausgestaltung der Erfindung können sich die Eintiefungen und/oder Ausstülpungen in regelmäßiger Abfolge wiederholen.

Vorzugsweise sind dabei die Übergänge stufenlos übergehend ausgebildet, bspw. wellenförmige Kontur aufweisend. Die Form der Wellen ist dabei nicht beschränkt auf einen regelmäßigen, insbesondere sinusförmigen Verlauf. Sie kann beschrieben werden durch die Form und Ausrichtung der Wellenberge und Wellentäler. Die maximale Erhebung der Wellenberge und die Sohle der Wellentäler werden als Scheitel bezeichnet. Bei linear verlaufenden Wellenbergen bzw. Wellentälern ergibt sich jeweils eine Scheitellinie eines Wellenbergs bzw. Wellentals. Im Gegensatz dazu können auch kreisförmige Scheitellinien der Wellentäler um einen punktförmigen Scheitel eines Wellenbergs oder Wellenberge wie Noppen im Wechsel mit invers geformten Wellentälern auf der Siebfläche angeordnet sein.

Bei einer weiteren vorteilhaften Ausführungsform der Erfindung kann die Größe der Wellen in Anströmrichtung variieren, beispielsweise kann die Höhe der Wellenberge bzw. die Tiefe der Wellentäler in Anströmrichtung zunehmen. Bei in Anströmrichtung abnehmender Höhe der Wellenberge bzw. Tiefe der Wellentäler können größere Schmutzpartikel zuerst und kleinere Schmutzpartikel zum Ende der Siebvorrichtung hin herausgesiebt werden. Bei ausreichender Länge der Siebvorrichtung in Anströmrichtung lässt sich damit eine entsprechende Verteilung der Partikelgröße bei gleich bleibend gutem Durchlassverhalten der gesamten Siebvorrichtung erreichen.

Bei rotationssymmetrischen Siebvorrichtungsformen, wie beispielsweise zylinderförmigen oder konischen, entspricht die Anströmrichtung der Rotationsachse der Siebvorrichtung. Dadurch kann ein besonders einfacher und kostengünstiger Aufbau erreicht werden. Grundsätzlich können die Scheitellinien der Wellen in jedem beliebigen Winkel zur Anströmrichtung angeordnet sein. Günstig ist eine Anordnung der Scheitellinien parallel zur Anströmrichtung oder senkrecht dazu. Bei einer weiteren vorteilhaften Ausführungsform der Erfindung ist die Siebfläche aus parallel zueinander und zur Anströmrichtung angeordneten Wellen mit geradlinigen Scheitellinien gebildet. Dadurch kann eine möglichst gleichmäßige Beaufschlagung der Siebfläche mit zu siebendem Wasser erreicht werden.

Da sich die Siebvorrichtung im Betrieb nicht bewegen muss, können auch asymmetrische Siebvorrichtungsformen realisiert werden. Das kann insbesondere bei beengten Platzverhältnissen vorteilhaft sein. Denn im Bereich des Pumpensumpfes einer Geschirrspülmaschine steht häufig sehr wenig Einbauraum zur Verfügung.

Als Siebmaterial können beispielsweise Fasern oder Fäden aus Kunststoff oder Drähte aus Metall zum Einsatz kommen, die durch eine geeignete Technik wie zum Beispiel Weben, Wirken oder Stricken miteinander verbunden werden. Bei derartigen Geflechten entsprechen die Löcher den Maschenweiten. Je nach Verbindungstechnik kann die Form und Größe der Maschen variieren. Aus Gründen der einfachen und kostengünstigen Herstellung wird bevorzugt ein gelochtes Blech als Siebmaterial verwendet. Bei einer weiteren bevorzugten Ausführungsform weist die Siebfläche Löcher mit unterschiedlicher Lochgeometrie auf. In Abhängigkeit vom Material sowie der Materialdicke der Siebfläche entstehen bereits unterschiedliche Lochgeometrien.

Da es sich bei der vorliegenden Vorrichtung um ein Mikrosieb handelt, kommen bevorzugt Feinbleche mit geringer Dicke zum Einsatz, in die die Löcher beispielsweise durch ein Laserbearbeitungsverfahren eingebracht werden. Auch hier kann die Geometrie der Löcher prinzipiell frei gewählt werden. Am einfachsten herstellbar und damit kostengünstig sind kreisrunde Löcher.

Bei einer weiteren Ausführungsform der Erfindung können sich die Löcher konisch verengen. Vorzugsweise verengen sie sich entgegen ihrer Durchströmungsrichtung. Partikel, die ein Loch an seiner engsten Öffnung passiert haben, bleiben im Folgenden weiter werdenden Bereich in der Regel auch nicht mehr hängen. Bleiben Partikel dagegen am Loch hängen, haften sie anströmseitig nur oberflächlich an. Damit kann also einem Verkeilen von Partikeln entgegengewirkt und ein Lösen gegebenenfalls verkeilter Partikel beim Rückspülen unterstützt werden.

Bei einer weiteren vorteilhaften Ausführungsform der Erfindung weist die Siebfläche eine variierende Lochdichte in Anströmrichtung auf. Dadurch lassen sich gezielt unterschiedliche Durchströmungswiderstände auf der Siebfläche erzeugen, die eine definierte Partikelverteilung bewirken. So kann insbesondere bei ungleichen Anströmungsverhältnissen asymmetrischer Siebvorrichtungen für eine weitgehend gleichmäßige Beaufschlagung der Siebfläche gesorgt werden, die ein einwandfreies Funktionieren der Siebeinrichtung sicherstellt.

Das Prinzip der Erfindung wird im Folgenden beispielhaft anhand von schematischen Darstellungen einer Ausführungsform näher erläutert. In der Zeichnung zeigen:
- Figur 1: eine perspektivische Teilansicht einer zylinderförmigen Siebvorrichtung mit wellenförmiger Siebfläche, und
- Figur 2: einen stark vergrößerte Schnittansicht der Siebfläche.

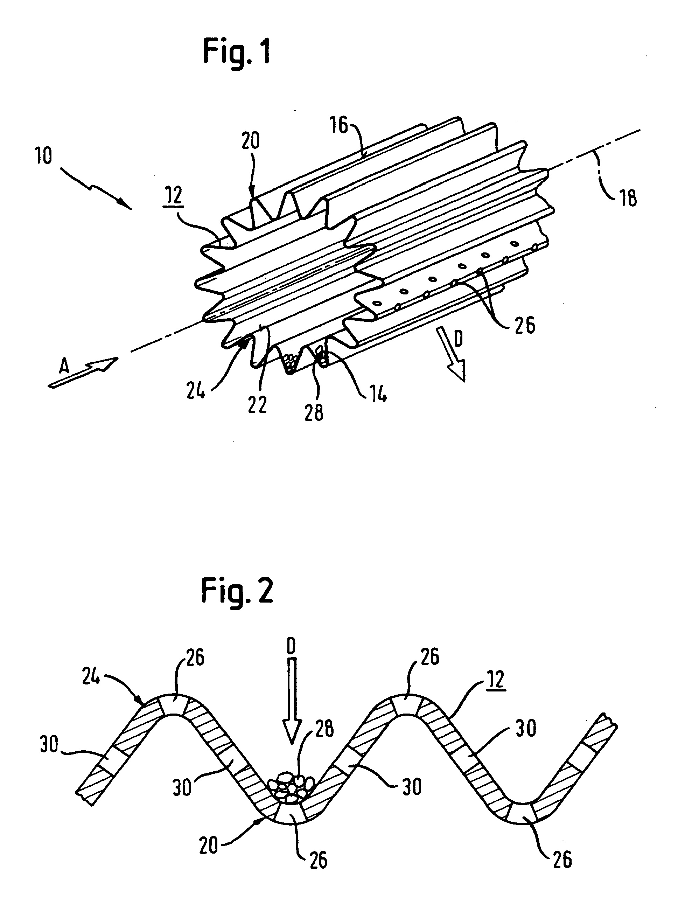

In Figur 1 ist eine zylinderförmige Siebvorrichtung 10 mit einer wellenförmigen Siebfläche 12 dargestellt. Die wellenförmige Siebfläche 12 bildet die Mantelfläche der Siebvorrichtung 10. Sie ist aus mehreren Wellen 14 gebildet, deren Scheitellinien 16 parallel sowohl zueinander als auch zur Längsachse 18 der Siebvorrichtung 10 verlaufen. Die Scheitellinien 16 definieren die maximale radiale Ausdehnung der Siebfläche 12 bezogen auf die Längsachse 18. Dieser Bereich wird als Wellental 20 bezeichnet. Die Siebvorrichtung 10 weist außerdem Scheitellinien 22 auf, die gegenüber den Scheitellinien 16 in einem geringeren radialen Abstand zur Längsachse 18 verlaufen. Sie kennzeichnen den Kamm eines Wellenbergs 24 der wellenförmigen Siebfläche 12.

Während eines Spülgangs wird das Spülwasser entlang einer Anströmrichtung A parallel zur Längsachse 18 in das Innere der feststehenden Vorrichtung 10 gepumpt. Die Siebvorrichtung 10 ist in der Geschirrspülmaschine vorzugsweise horizontal eingebaut, kann aber auch zum Beispiel vertikal gerichtet eingebaut sein. Im Betrieb durchströmt das Spülwasser die Siebvorrichtung 10 von innen nach außen durch die wellenförmige Siebfläche 12 in einer Durchströmungsrichtung D. Dazu weist die wellenförmige Siebfläche 12 eine Anzahl von Löchern 26 auf, die in Figur 1 lediglich beispielhaft für eine Welle 14 eingezeichnet sind.

Bei der Durchströmung der Siebfläche 12 lagern sich Schmutzpartikel 28 im Bereich der Wellentäler 20 ab. Weil sie sich in der Wellentälern 20 konzentrieren, komprimieren sie sich dort zu größeren Fladen. Zugleich bleiben die Bereiche der Wellenberge 24 frei von Partikeln und gewährleisten so einen weiteren Durchfluss des Spülwassers.

Die Reinigung der Siebvorrichtung 10 erfolgt durch einen Rückspülvorgang, bei dem die Strömungsrichtung umgekehrt wird. Wasser fließt dann entgegen der Durchflussrichtung D durch die Siebfläche 12 und löst dabei die in den Wellentälern 20 angesammelten Partikel 28 heraus, welche dann entgegen der Anströmrichtung A aus der Siebvorrichtung 10 wieder herausgespült werden. Die angesammelten Schmutzpartikel lösen sich dabei fladenförmig ab. Die Siebvorrichtung 10 erhält dadurch einen sehr guten Selbstreinigungseffekt.

Figur 2 bietet eine vergrößerte Schnittansicht durch einen Bereich der wellenförmigen Siebfläche 12. Die Löcher 26 im Bereich der Wellenberge 24 und der Wellentäler 20 sind dabei leicht kegelförmig bzw. konisch geformt. Diese Lochgeometrie kann bereits bei der Herstellung der wellenförmigen Siebfläche 12 entstehen. Die Siebfläche 12 ist aus einem Blech hergestellt, in das zunächst die Löcher 26 eingebracht werden und das erst anschließend in die Wellenform gebracht wird. Dabei weiten sich die Löcher 26 im Bereich der Wellenberge 24 entgegen und die der Wellentäler 20 in Durchströmungsrichtung entsprechend kegelförmig auf. Zugleich bleibt eine Anzahl von Löchern 30 in den Übergangsbereichen zwischen Wellental 20 und Wellenberg 24 unverändert zylinderförmig. Diese unterschiedliche Lochgeometrie hat Auswirkungen auf das Durchströmungsverhalten der wellenförmigen Siebfläche 12. Denn die sich verengenden Löcher 26 im Bereich der Wellenberge 24 bedingen einen größeren Durchflusswiderstand. Umgekehrt bietet sich dem anströmenden Wasser an den sich erweiternden Löchern 26 im Bereich der Wellentäler ein geringerer Widerstand. Wenn das Spülwasser in die Siebfläche 12 in Durchströmungsrichtung D durchströmt, sammeln sich die Schmutzpartikel 28 zunächst in den Bereichen mit geringem Durchflusswiderstand an. Dadurch steigt der dortige Durchströmungswiderstand an. Zugleich stehen die Löcher 26 in den verbleibenden Bereichen unverändert zur Verfügung, gewährleisten zusammen also weiterhin einen ausreichenden Durchströmungsquerschnitt für das Wasser. Sie können außerdem nicht so schnell durch Partikel verlegt werden, da sie sich an den Flanken und dem Scheitel der Wellenberge 24 kaum halten können. Damit unterstützt die Lochgeometrie der Löcher 26 die Partikelkonzentration in den Wellentälern. Außerdem wirken die kegelförmigen Löcher 26 der Wellentäler 20 beim Rückspülvorgang wie Düsen und unterstützen das Ablösen der dortigen Partikel 28.

### Bezugszeichenliste

| | | |
|---|---|---|
| 10 | - | Siebvorrichtung |
| 12 | - | wellenförmige Siebfläche |
| 14 | - | Welle |
| 16, 22 | - | Scheitellinie |
| 18 | - | Längsachse der Siebvorrichtung |
| 20 | - | Wellental |
| 24 | - | Wellenberg |
| 26, 30 | - | Loch |
| 28 | - | Schmutzpartikel |
| A | - | Anströmrichtung |
| D | - | Durchströmungsrichtung |

## Patentansprüche

1. Geschirrspülmaschine, wenigstens aufweisend einen Hydraulikkreislauf und eine Siebvorrichtung (10), die eine in dem Hydraulikkreislauf angeordnete ortsfeste Siebfläche (12) zum Filtern umgewälzten Spülwassers aufweist wobei die Siebfläche (12) sich in Durchströmungsrichtung (D) erstreckende Erhebungen und/oder Eintiefungen aufweist, um quer zur Durchströmungsrichtung (D) der Siebfläche (12) gerichtete Querströme zu erzeugen, welche bewirken, dass zurückgehaltene Partikel (28) sich in ausgewählten Bereichen (20) sammeln, **dadurch gekennzeichnet, dass** die Siebvorrichtung (10) mittels Rückspülen mit einer Rückspüleinrichtung reinigbar ist, welche die Strömungsrichtung des Spülwassers umkehrt, so dass dieses entgegen der Anströmrichtung durch die Siebvorrichtung (10) strömt.

2. Geschirrspülmaschine nach Anspruch 1, **dadurch gekennzeichnet, dass** die Siebfläche (12) zylinderförmig oder als konische Mantelfläche ausgebildet ist.

3. Geschirrspülmaschine nach Anspruch 1 oder 2, **dadurch gekennzeichnet, dass** die Erhebungen und/oder Eintiefungen der Siebfläche (12) stufenlos übergehend, insbesondere wellenförmig, ausgebildet ist.

4. Geschirrspülmaschine nach Anspruch 3, **dadurch gekennzeichnet, dass** die Siebfläche (12) parallel zueinander verlaufende Wellen (14) umfasst.

5. Geschirrspülmaschine nach Anspruch 3 oder 4, **dadurch gekennzeichnet, dass** Scheitellinien (16, 22) der Wellen (14) parallel zur Anströmrichtung (A) verlaufen.

6. Geschirrspülmaschine nach einem der vorhergehenden Ansprüche, **dadurch gekennzeichnet, dass** die Siebfläche (12) Löcher (26, 30) mit unterschiedlicher Lochgeometrie aufweist.

7. Geschirrspülmaschine nach Anspruch 6, **dadurch gekennzeichnet, dass** sich die Löcher (26; 30) konisch verengen.

8. Geschirrspülmaschine nach Anspruch 6 oder 7, **gekennzeichnet durch** in eine Anströmrichtung (A) variierende Lochdichte der Siebfläche (12).

## Claims

1. Dishwasher, at least featuring a hydraulic circuit and a screening apparatus (10) which has a screening face (12) arranged permanently in the hydraulic circuit for filtering recirculated rinsing water, wherein the screening face (12) features raised sections and/or indentations extending in the throughflow direction (D) in order to create transverse currents directed transversely to the throughflow direction (D) of the screening face (12) which cause held-back particles (28) to collect in selected areas (20), **characterised in that** the screening apparatus is able to be cleaned by backflushing with a backflushing device which reverses the flow direction of the rinsing water so that said water flows through the screening apparatus (10) against the inflow direction.

2. Dishwasher according to claim 1, **characterised in that** the screening face (12) is embodied in the shape of a cylinder or as a conical outer surface.

3. Dishwasher according to claim 1 or 2, **characterised in that** the raised sections and/or indentations of the screening face (12) are embodied with seamless transitions, especially in the shape of an undulation.

4. Dishwasher according to claim 3, **characterised in that** the screening face (12) comprises undulations (14) running in parallel to one another.

5. Dishwasher according to claim 3 or 4, **characterised in that** vertex lines (16, 22) of the undulations (14) run in parallel to the inflow direction (A).

6. Dishwasher according to one of the previous claims, **characterised in that** the screening face (12) features holes (26, 30) with a different hole geometry.

7. Dishwasher according to claim 6, **characterised in that** the holes (26; 30) narrow conically.

8. Dishwasher according to 6 or 7, **characterised by** a hole density of the screening face (12) which varies in the inflow direction (A).

## Revendications

1. Lave-vaisselle présentant au moins un circuit hydraulique et un dispositif de filtrage (10) qui présente une surface filtrante (12) fixe disposée dans le circuit hydraulique destinée à filtrer l'eau de lavage mise en circulation, la surface filtrante (12) présentant des élévations et/ou des approfondissements s'étendant dans le sens d'écoulement (D) afin de générer des courants transversaux dirigés transversalement au sens d'écoulement (D) de la surface filtrante (12), lesquels ont pour effet que des particules retenues (28) s'accumulent dans des zones sélectionnées (20), **caractérisé en ce que** le dispositif de filtrage (10) est nettoyable au moyen d'un lavage en retour à l'aide d'un dispositif de lavage en retour, lequel inverse le sens d'écoulement de l'eau de lavage de sorte que celle-ci s'écoule à travers le dispositif de filtrage (10) en sens inverse du sens du courant.

2. Lave-vaisselle selon la revendication 1, **caractérisé en ce que** la surface filtrante (12) est réalisée de manière cylindrique ou comme surface latérale conique.

3. Lave-vaisselle selon la revendication 1 ou 2, **caractérisé en ce que** les élévations et/ou approfondissements de la surface filtrante (12) sont réalisés en se transformant de manière progressive, notamment de manière ondulée.

4. Lave-vaisselle selon la revendication 3, **caractérisé en ce que** la surface filtrante (12) comprend des ondulations (14) s'étendant parallèlement les unes aux autres.

5. Lave-vaisselle selon la revendication 3 ou 4, **caractérisé en ce que** les lignes de crête (16, 22) des ondulations (14) s'étendent parallèlement au sens du courant (A).

6. Lave-vaisselle selon l'une quelconque des revendications précédentes, **caractérisé en ce que** la surface filtrante (12) présente des trous (26, 30) à géométrie de trous différente.

7. Lave-vaisselle selon la revendication 6, **caractérisé en ce que** les trous (26 ; 30) se rétrécissent de manière conique.

8. Lave-vaisselle selon la revendication 6 ou 7, **caractérisé par** une densité de trous de la surface filtrante (12) variant dans un sens du courant (A).
